# EUROPEAN PATENT SPECIFICATION

(11) **EP 0 338 118 B1**
(45) Date of publication and mention of the grant of the patent: **10.11.1993**
(21) Application number: 88113143.7
(22) Date of filing: 12.08.1988
(51) Int. Cl.: B65G 45/00

(54) **Belt cleaner and its scraper**
Bandreiniger und dessen Kratzer
Nettoyeur de bande et sa raclette

(30) Priority: 18.04.1988 JP 94739/88
(43) Date of publication of application: 25.10.1989
(73) Proprietor: Nippon Tsusho Kabushiki Kaisha, Chiyoda-ku Tokyo 101 (JP)
(72) Inventor: Yoshizako, Kageyoshi, Sakai-shi Osaka-fu (JP); Atari, Yasuhiro, Neyagawa-shi Osaka-fu (JP)
(74) Representative: Hering, Hartmut, Dipl.-Ing.

(56) References cited:
- GB-A- 1 578 582
- GB-A- 2 184 084
- US-A- 3 841 470
- US-A- 4 105 109
- US-A- 4 344 525

## Description

The present invention relates to a belt cleaner having a scraper mounted thereon by which the leavings of conveying material, e.g. coke, stuck on the surface of a conveyor belt are removed during the return movement of the belt according to the preamble of claim 1.

A prior art cleaner for a conveyor belt of the above type is disclosed in US-A-3841470 wherein the conveyor belt includes a plurality of cleaner means disposed thereon in the transverse direction of the conveyor belt at the return side of the same. Each cleaner means has a scraping portion thereof which intends to come into contact with the belt surface, while all of which are arranged in linear relationship. More specifically, a scraper having, at uppermost end, a scraping portion thereof comprising of tip members is yieldingly supported by a resilient member so that the scraping portion thereof becomes in contact with the belt surface under pressure by the resilience of the resilient member.

In GB-A 2 184 084 there is shown and described a conveyor belt scraper and mounting therefor. The scraper and holding means thereof have a lengthwise extent for spanning the width of the conveyor belt. The holder means are urged for rotary displacement about an axis extending transversely of the belt. By a tensioning means this holder means is urged to a standing position. The axis of the rotary displacement is defined by shaft members provided at each end of the holder means and mounted for rotary displacement about a common axis to supports. This scraper blade is in plan view of curved configuration, which may be either convex of concave in terms of the direction of movement of the conveyor run being cleaned or scraped.

It is known that an endless conveyor belt, which is fitted for running in a circle between a drive pulley and an idler pulley, is supported on the forward side thereof by a plurality of guide rollers arranged at "trough" angles so as to be formed in a bow-like cross sectional shape in order to carry the transferring material in a stable manner. In other words, on the forward side of the running belt transferring the material thereon forward, the belt is supported so that the lengthswisely extending central region thereof can arcuately be deflected downward. The transferring materials are consecutively transferred generally on the central region of the belt, which will result in intensive wear on the central region of the belt surface rather than on both sides regions of the same.

Because of its tendency to deflection (termed generally as a "trough" tendency), the belt is deflected upward at a point midway between the side ends thereof thus to form an arch shape in cross section on the return side of the belt where the belt runs backward opposite to the forward direction thereof after discharging the transferring material therefrom. In such an arrangement of the known cleaner, the scraping portions of the cleaner means arranged in linear relationship are prevented from matching the belt surface when coming into close contact with the same. More specifically, there is a clearance between the scraping portions arranged linearly in said cleaner and the central region of the belt. The clearance becomes greater when the amount of wear on the central region of the belt surface is increased. Consequently, it will appear that the leavings of material on the central region of the belt surface cannot positively be scraped off by the scraping portions of the cleaner. Since the leavings of material adhered to the belt are substantially greater in amount at the lengthwisely extending central region of the belt surface than the side region of the same, some of the scraping portions disposed in the center get worn intensively in proportion to the amount of scraped material. This allows the clearance between the centrally mounted scraping portions and the belt surface to become greater gradually.

Each of the cleaner means has a scraper thereon which is supported yieldingly by the resilient member thus to be biased independently. When one of the scrapers is tilted laterally, a mass of the scraped material becomes trapped between the scraper and its adjacent scraper. This prevents the adjacent scraper from being biased independently, which will result in a stop of the returning movement of the scraping portion of the scraper from its biased position to its rest position for coming into contact with the belt surface.

The present invention is directed towards a belt cleaner with its scraper in which the aforesaid problems may be solved.

According to the present invention, there is provided a belt cleaner as set out in claim 1. This belt cleaner has a scraper thereon which extends in the transverse direction of the belt at the return side of the conveyor belt thus to remove the leavings of transferring material from the belt surface. The scraper is deflected a maximum from the axis at a point midway between both ends of the belt to form an arch shape in cross section. Accordingly, when the scraper is turned upward about an axis to its standing position, the scraping portion thereof will arch its central region as lifted upward. This allows the scraping portion of the scraper to remain in close contact with the belt surface even if either the belt is a trough-shaped in cross section or the lengthwisely extending central region of the belt surface gets worn.

Additionally the scraper has a plurality of support members including scraping portions thereof and mounted in a row in the traseverse direction of the belt. The support members are flexibly connected to one another by their respective hinge portions. The support members are linearly embedded in a resilient board so that each pair of the adjacent support members are flexibly joined with each other. As the result, the scraper which may be formed of no bow-like shape can be bent along the hinge portions when attached to a holder in the belt cleaner and thus, will correspond to the trough shape of the belt upon having a specified curvature radius.

Furthermore, according to claim 2 the support members embedded in the resilient board are also connected with one another by their respective connecting-portions so as not to separate from each other in the forward direction of the belt. When one of the two adjoined support members rocks in the forward direction of the belt, the other support member is also displaced in rocking motion. Thereby, it is unlikable that the support members are prevented from returning to their original positions due to the presence of remains of the scraped material between their respective scraping portions which occurs when the support members rock in the forward direction of the belt respectively.

The dependent claims concern particular embodiments of the invention.

### BRIEF DESCRIPTION OF THE DRAWINGS

Fig. 1 is an exploded perspective view showing a support shaft of a scraper, a support supporting the shaft, and a tensioning means for urging the scraper for rotary displacement, which are arranged in a belt cleaner according to a first embodiment of the present invention;
Fig. 2 is a side view of the belt cleaner according to the embodiment;
Fig. 3 is a partial cross sectional plan view showing the support shaft mounted to the support on one side of the belt cleaner according to the embodiment;
Fig. 4 is an enlarged cross sectional view of the scraper in the belt cleaner, taken along the line IV-IV of Fig. 3;
Fig. 5 is a front view showing that the scraper in the belt cleaner is not in standing position;
Fig. 6 is a front view showing that the scraper in the belt cleaner is turned upward about an axis to its standing position;
Fig. 7 is a partially cross sectional side view illustrating that the rotating motion of the support shaft is restricted by a stopper member in the belt cleaner;
Fif. 8 is a longitudinally cross sectional view of another scraper, in the form of a first embodiment, taken along its lengthwise direction;
Fig. 9 is a longitudinally cross sectional view of the scraper taken along the line IX-IX of Fig. 8;
Fig. 10 is a front view illustrating that a plurality of support members are linearly fitted into a molding block to form the scraper of the embodiment by means of insert molding;
Fig. 11 is a longitudinally cross sectional view of the support member taken along the line XI-XI of Fig. 10;
Fig. 12 is a perspective view showing the scraper in its common state;
Fig. 13 is a perspective view showing the scraper bent in an arcuate shape;
Fig. 14 is a longitudinally cross sectional view of a further scraper, in the form of a second embodiment, taken along its lengthwise direction;
Fig. 15 is a front view illustrating that a plurality of support members are linearly fitted into a molding block to form the scraper of the second embodiment by means of insert molding;
Fig. 16 is a transversely cross sectional view of the support members in the molding block, taken along the line XVI-XVI of Fig. 15;
Fig. 17 is a front view illustrating that the support members are linearly fitted into a molding block to form a scraper, in the form of a third embodiment, by means of insert molding; and
Fig. 18 is an enlarged transversely cross sectional view of the support members taken along the line XVIII-XVIII of Fig. 17.

### EMBODIMENTS

Preferred embodiments of the present invention will be described in detail in conjunction with the accompanying drawings.

In the embodiments described hereinafter, a belt cleaner according to the present invention is disposed in the transverse direction of and on the return side of a conveyor belt 1 and includes a scraper 14 for removing the leavings stuck on the surface of the belt. The scraper 14 is adjustably supported for rotary displacement about an axis A extending in the transverse direction of the belt and has a scraping portions 32 thereon which intends to be in contact with the surface of the belt and is outwardly deflected a maximum from the common axis A at a point midway between the side ends of the belt 1 so that the scraper 14 can be formed in a bow shape.

In the drawings, a length of the conveyor belt 1 on the return side is shown in particular. The side referred to as a "return side" is opposite to the forward side of a running belt on which the amount of material is transferred forward. After unloading the transferring material, the belt fitted between a drive pulley and an idler pulley to run in a circle makes a full turn at the terminal end thereof where one of the pulleys is mounted in position, and then will run backward opposite to the forward direction throughout the return section. Therefore, the return side includes a running passage on the pulley after the turning point.

### (Complete Arrangement of Belt Cleaner)

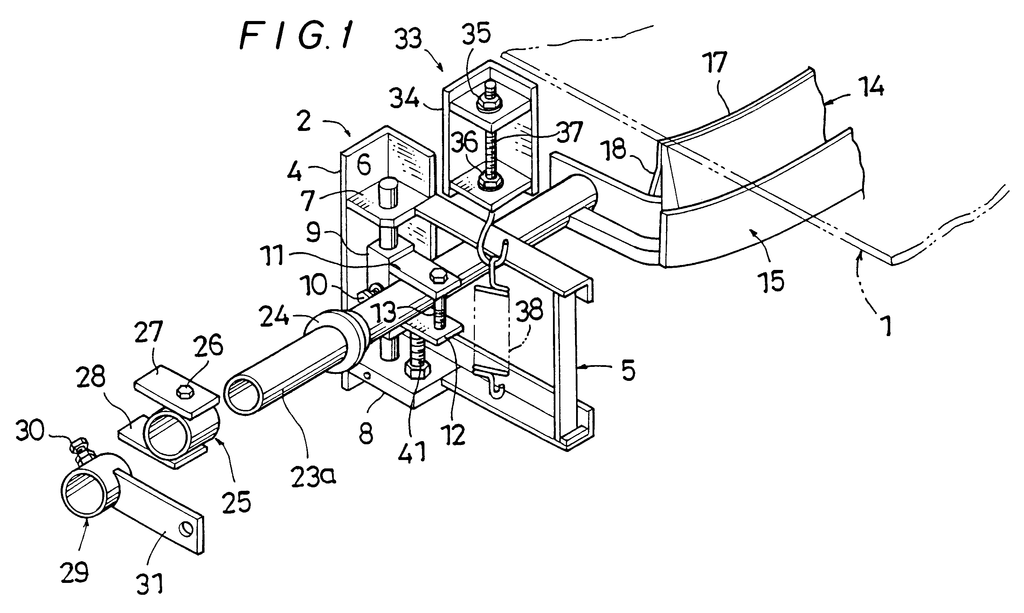

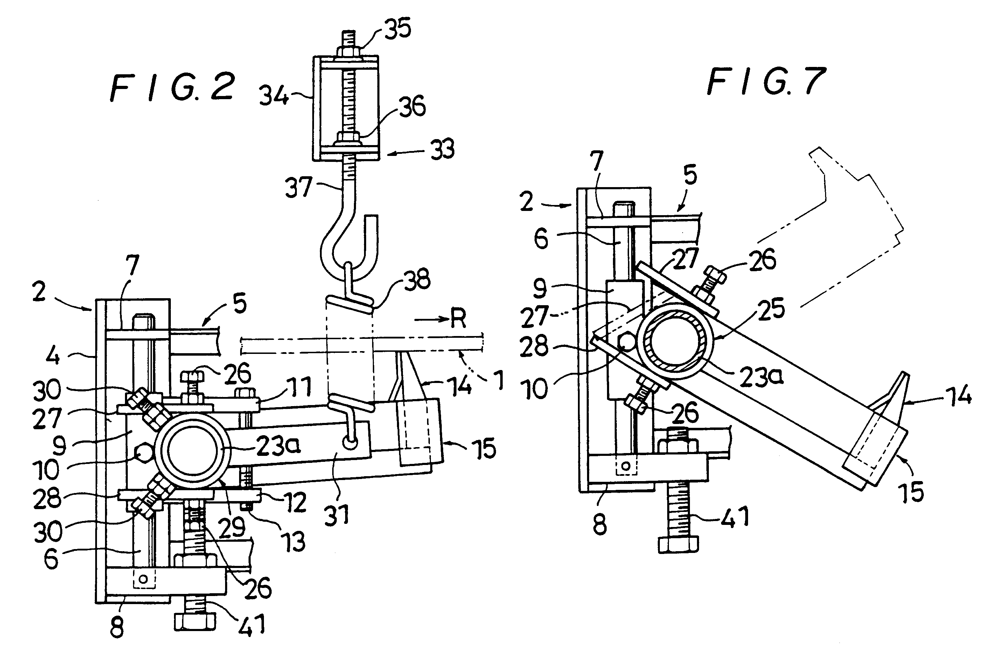

Referring to Figs. 1 to 8, a pair of supports 2 are fixedly disposed on both right and left sides of a belt 1 at the return side of the same. Since the supports 2 on their respective sides of the belt 1 are identical in construction and arranged in symmetrical relationship, one of the supports 2 is particularly shown in the drawings.

The support 2 comprises a pillar member 4 and a frame member 5 attached to the pillar 4, thus to form a square frame. The pillar 4 is fixedly mounted to a side wall of a hopper or a chute (not shown) disposed beneath the belt while the frame 5 is fitted in an opening of the side wall of the hopper or the chute. A vertically extending rod 6 is attached at both upper and lower ends thereof to the pillar 4 by means of two support members 7 and 8. A slide member 9 is slidably mounted to the middle section of the rod 6 so that it can be moved on the rod 6 and fixed at a specific position by a fixing means 10 such as a set bolt. A pair of holding arms 11 and 12 extend from a side of the slide member 9 in transverse directions of the frame 5. The arms 11 and 12 are spaced and joined by a pin 13 at their distal ends. Referring to the drawings, the pin 13 is a socket head bolt which extends through the upper holding arm 11 and is screwed into the lower holding arm 12.

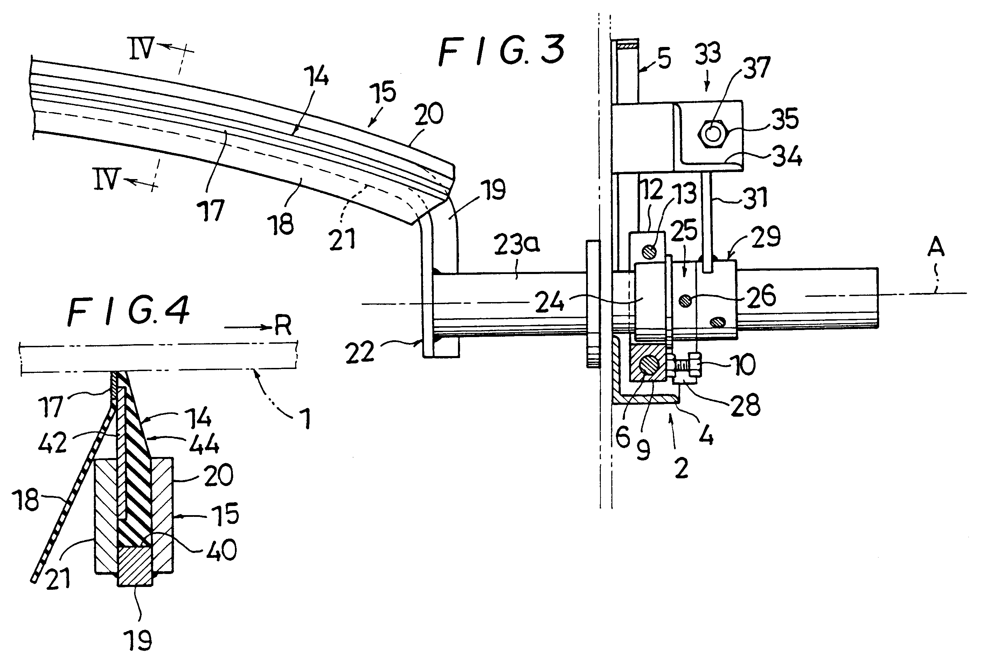

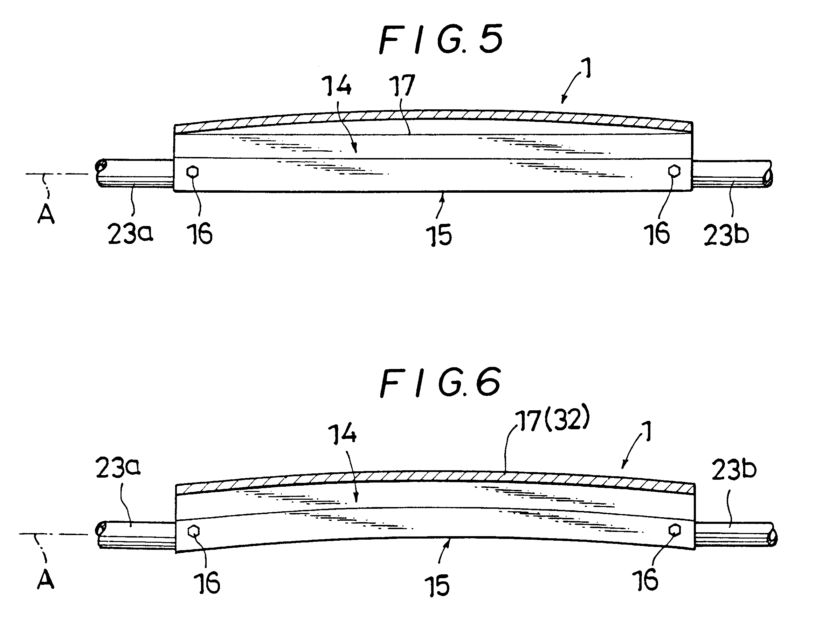

The scraper 14 is detachably supported by a holder 15 of bow-like shape deflecting in the return direction R of the belt 1 and secured with rataining means 16 such as set bolts (See Figs.5 and 6). More particularly, the scraper 14 is formed in a curve to match the bow-shaped holder 15 and then, mounted to the holder 15. As shown in Fig. 4, the scraper 14 has a tip 17 of wear-resistant material such as carbide alloy or ceramic fixedly mounted on the back top thereof. The scraper 14 also has beneath the tip 17 a resilient sheet member 18 such as a rubber sheet fixedly mounted at top end to the back thereof. The sheet member 18 extends downward so as to cover the back of the scraper 14. The scraper 14 will further be described in detail later.

The holder 15 comprises an arcuate bottom member 19 and two rail-like holding walls 20 and 21 mounted in parallel arrangement to the bottom member 19 so as to form a holding means, more specifically a holding groove 40 as shown. As shown in Fig. 3, both distal ends of the bottom member 19 and rear wall 21 form enlongated portions 22, 22 extending in the counter-return running direction of the belt so that the elongated portions 22, 22 can be fixedly mounted to their respective support shafts 23a and 23b. The support shafts 23a and 23b are coaxially disposed so that the scraper 14 can turn about the common axis A.

The holder 15 provided with the scraper 14 is arranged in place so that the belt 1 can run across the turning axis A while the support shafts 23a, 23b are held by the supports 2 and 3 respectively. When the scraper 14, which is shaped in such a manner that deflection from the axis A is a maximum at a midway between the side ends of the belt 1, is turned upward by rotating the support shafts 23a, 23b about the axis A from its rest position shown in Fig. 5 to its working position shown in Fig. 6, the top end of tip 17 on the scraper 14 will arch its central region in the shape of a bow thus to define a scraping section 32 of the same which is to be in contact with the concave surface of the belt 1.

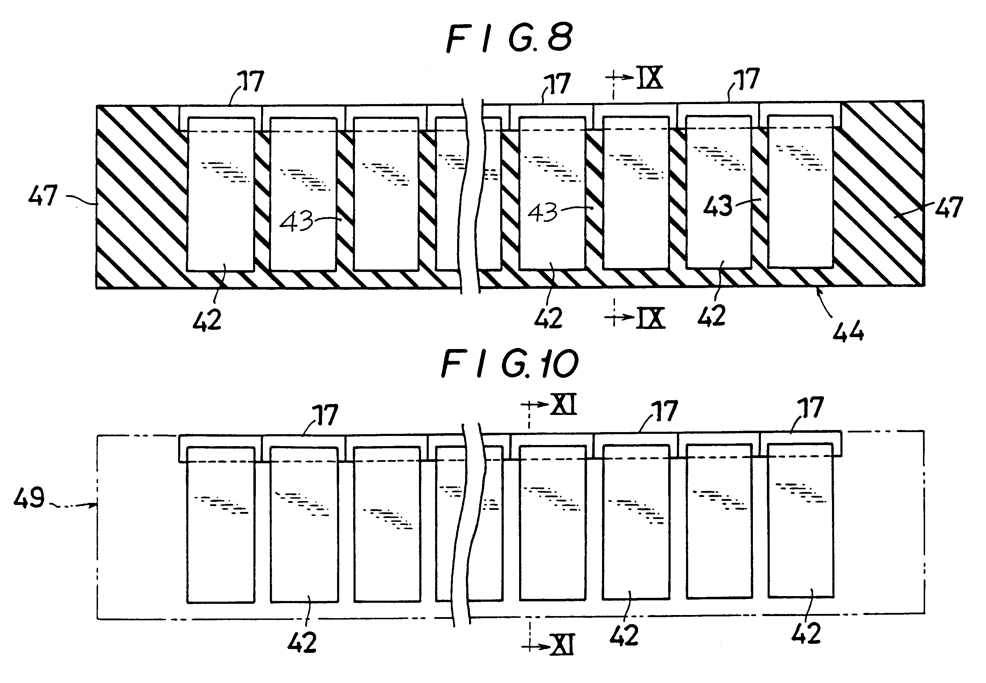

The support shaft 23a is mounted to the support 2 so as to extend through the frame 5 of the support 2 and to be held between the holding arms 11 and 12. A bearing member 24 of synthetic resin such as nylon is fitted onto the support shaft 23a and thus, can be fixedly gripped by the holding arms 11 and 12 with the pin 13 being tightened. In this arrangement, the support shaft 23a can rotate in the bearing 24. A stopper member 25 is fitted at the outer side of the bearing 24 onto the support shaft 23a by fixing means 26 such as a set bolt. The stopper 25 has at top and bottom a pair of stopper strips 27, 28 such that the upper and lower stopper strips 27, 28 are located on the upper and lower sides of the fixing means 10 of the slide member 9 respectively. Accordingly, during the rotary displacement of the support shaft 23a, the upper and lower stopper strips 27, 28 will respectively come into contact with the fixing means 10 thus to restrict the movement of the support shaft 23a, as shown in Fig. 7. Additionally, an actuator 29 is fitted behind the stopper 25 onto the support shaft 23a by a fixing means 30 such as a set bolt. The actuator 29 has an actuator arm 31 which extends in a direction across the frame 5 and is linked to a tensioning means described later. The lower support member 8 has a push-up bolt 41 screwed thereinto. For vertical adjustment of the slide member 9 with the fixing means 10 remaining released, the slide member 9 can thus be lifted upward by pressing upward with the push-up bolt 41 against the bottom of the holding arm 12.

As not shown, the support shaft 23b on the opposite side is supportedly attached to the other support in an equal manner.

A tensioning means 33 located above the actuator arm 31 is mounted to the side wall of the chute or the hopper. The tensioning means 33 comprises a fixed member 34 secured to the side wall, e.g. the chute side wall, an adjusting member 37 including a hook bolt threaded for forward and backward movement into the fixed member 34 with the use of a couple of nuts 35 and 36, and an extension spring 38 connected to the adjusting member 37. The extension spring 38 is linked at the lowermost end thereof to the actuator arm 31. Accordingly, when the adjusting member 37 is lifted upward by rotating the nuts 35 and 36, the actuator arm 31 moves upward as a tension on the spring 38 is increased. This allows the support shafts 23a and 23b to rotate in such a direction that the scraper 14 is raised to stand with its scraping portion 32 touching the back surface of the belt 1 under pressure, as shown in Fig. 6.

### (First Embodiment of the Scraper)

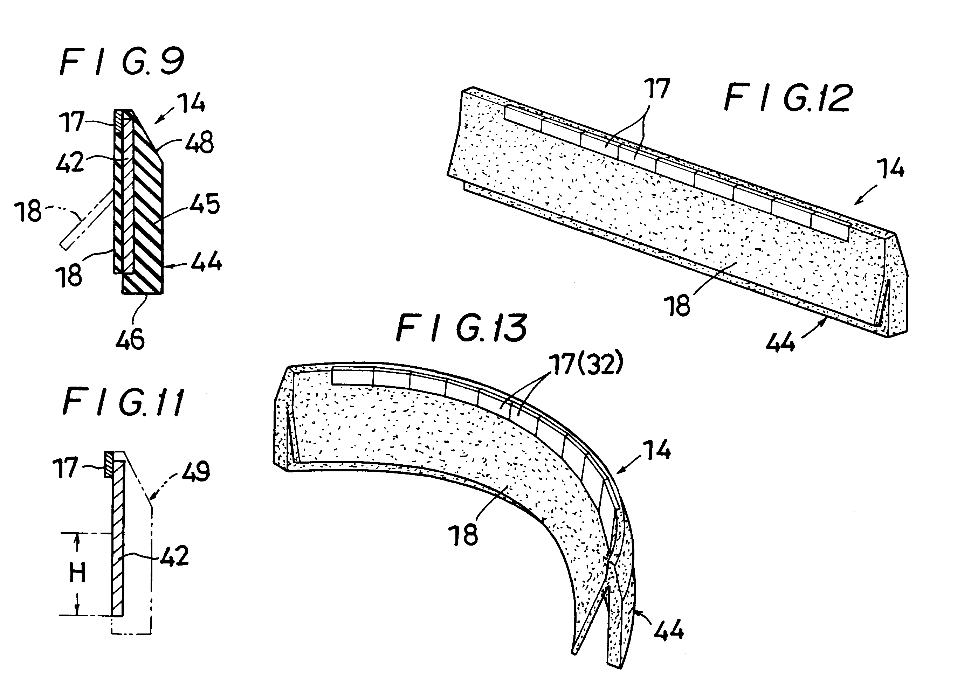

There is provided another form of the scraper including a plurality of support members 42 of plate metal which have tips 17 attached by brazing to the top end thereof respectively thus to form a scraping portion 32 and are flexibly connected in a row with one another by hinge portions 43, as shown in Figs. 8 and 9. According to this embodiment, the tip 17 has a width slightly greater than that of the support member 42 so that it can outwardly extend at both ends from the support member 42. The support members 42 are arranged in a row and embedded in a resilient board 44, e.g. of natural or synthetic rubber, while the tips 17 are arranged in a line. The resilient board 44 comprises a cover wall 45 covering the front sides (opposite to the tip mounting sides) of the support members 42 and the front sides of the tips 17, a seat wall 46 covering the bottom sides of the support members 42, the hinge portions 43, and two extending portions 47 provided on both lengthwise ends of the scraper 14 and having no support member 42. The cover wall 45 has on the upper end a sloping portion 48 thereof tapered to the uppermost ends of the tips 17. While the resilient board 44 is formed by molding, a flexible sheet described above is also formed in the back of the suppot members 42 from resilient material such as natural or synthetic rubber. This is done in such a manner that the support members 42 having their respective tip 17 are fitted in a row into a molding block 49 togather with a volume of unvulcanized rubber material which is then vulcanized as shown in Figs. 10 and 11. The adhesive processing is preliminarily made for securing the tips 17 and support members 42 to the resilient board 44 fixedly. Also, the same is preliminarily made for securing the flexible sheet 18 to the back uppermost portions of the support members 42 and the lowermost portions of the tips 17 while the back lower portions H of the support members 42 are provided with either no adhesive processig for preventing the attachment of the flexible sheet 18 or positive removal processing which may be effected with the use of a masking sheet.

The scraper 14 formed of belt-like shape shown in Fig. 12 is thus flexible as shown in Fig. 13 so that it can be fixedly fitted into the holding groove 40 of the holder 15. Since the support members 42 on the resilient board 44 are resiliently held in the holding groove 40, the minimal movement of vibration transmitted from the tips 17 to the support members 42 is prevented from developing a greater noise in the resonant effect. Additionally, the leavings scraped by the tips 17 fall into a hopper upon being guided by the flexible sheet 18 and thus, will be prevented from accumulating on the holder 15. Although the embodiment employs the resilient sheet 18 mounted to the back side of the scraper 14, another similar resilient sheet may be mounted to the front side of the scraper 14 (more specifically, to the right wall of the resilient member 44 shown in Fig. 4) so as to extend downward from the above and cover the holding wall 20 in the front of the holder 15.

### (Second Embodiment of the Scraper)

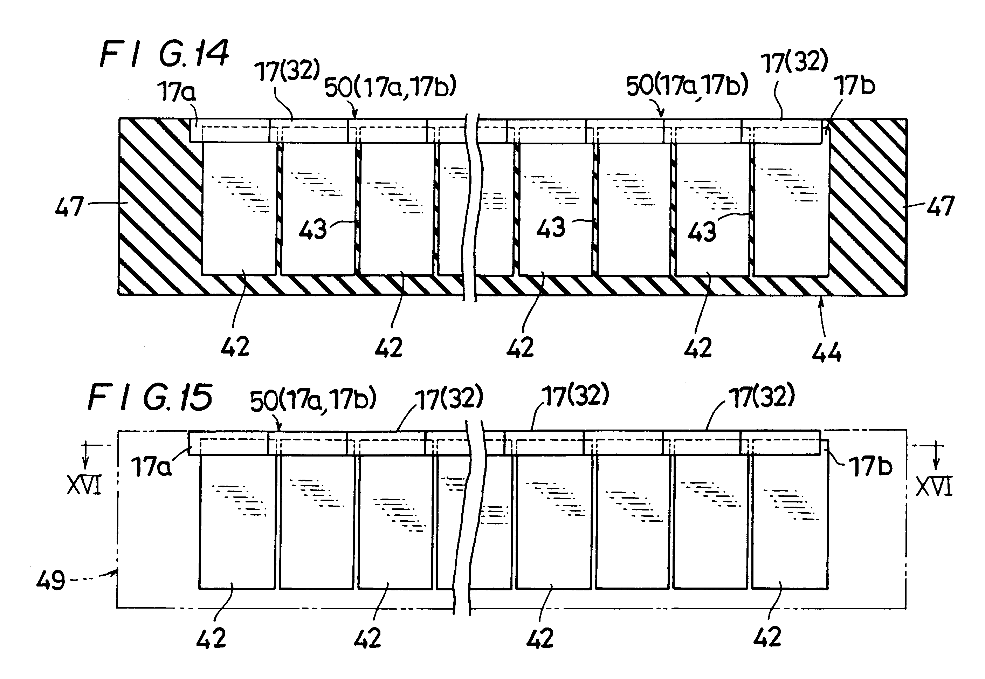

Figs. 14 to 16 illustrate a second embodiment of the scraper. There is provided a tip 17 mounted to the uppermost end of a support member 44 by brazing to form a scraping portion 32. The tip 17 is fixedly mounted in widthwisely biased arrangement to the top end of the support member 44 so as to extend from the one end of the support member 44 and thus, have an extension portion 17a thereof. On the opposite end of the support member 44, there is provided a recessed region 17b from where the other end of the tip 17 is removed. The extension portions 17a on the support members 42 are fitted into the recessed regions 17b of the support members 17 respectively thus to define connecting portions 50. After the supporting members 42 connected with one another by the connecting portions 50 are fitted in a row into a molding block 49 together with a volume of unvulcanized rubber material, the scraper 14 of belt-like shape is formed by vulcanizing the rubber material.

The scraper 14 according to the second embodiment is flexible for deflecting in a curve as well as the scraper of the first embodiment so that it can be mounted in the holding groove 40 of the holder 15. The support members 42 embedded in a row in the resilient board 44 are connected with one another by their respective connecting portions 50 formed by fitting the extension portions 17a into the recessed regions 17b so that the two adjoined support members 42 cannot be separated from each other in the forward direction of the belt. Thus, when one of the two adjoined support members 42 rocks in the forward direction of the belt, the other support member 42 is also displaced in rocking motion. Thereby, the tips 17 on the support members 42 are not spaced from each other to have a clearance into which a part of the leavings scraped may enter. Nevertheless, if no connecting portions 50 are provided and thus, the two adjoined support members 42 are so movable as to allow their respective rocking motions, the support members 42 rock in the forward direction of the belt respectively during the scraping operation on the belt surface. This action causes the support members 42 to be separated from each other and then, have clearances therebetween into which portions of the leavings scraped enter. It is a disadvatage that the support member 42 will thus be prevented from returning to their original positions. This problem can be solved by providing the connecting portions 50 as set forth above.

### (Third Embodiment of the Scraper)

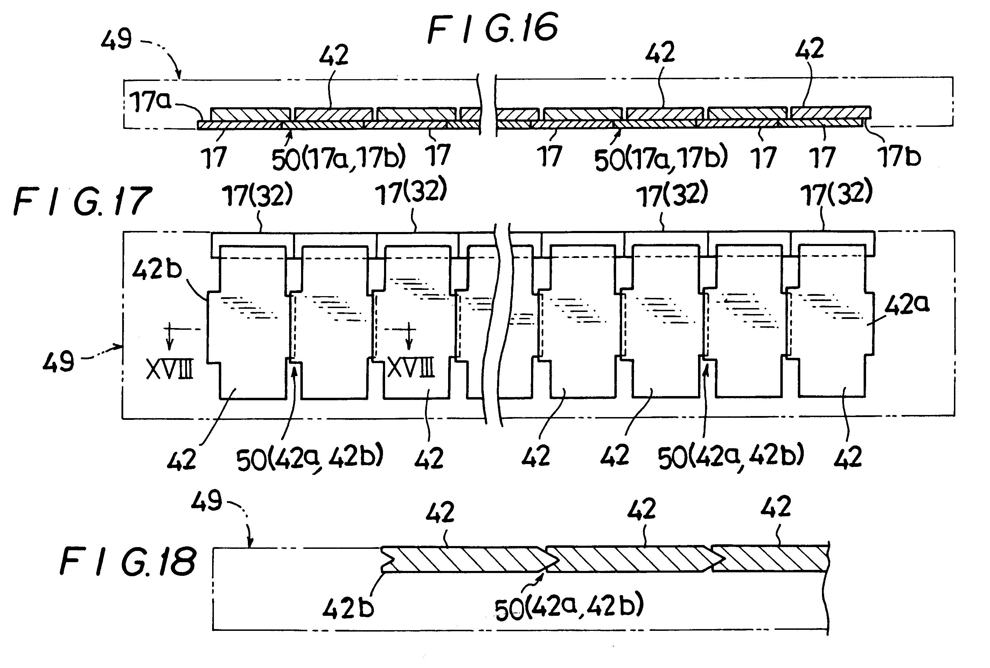

Figs. 17 and 18 illustrate a third embodiment of the scraper. According to the embodiment, there is provided a tip 17 having a width greater than that of a support member 42 and fixedly mounted to the uppermost end of the support member 42 so that it can extend outwardly from both ends of the support member 42. The tips 17 are directly communicated with one another as the support members 42 are arranged in a row. The support member 42 has two wing portions 42a and 42b extending outwardly from both the side ends thereof. The wing portion 42a of the support member 42 is fitted into a recess in the wing portion 42b of the next support member 42 so that a connecting portion 50 can be formed. The scraper 14 of belt-like shape similar to the one of the first or second embodiment is formed in such a manner that the support members 42 connected with one another by the connecting portions 50 are fitted in a row into a molding block 49 together with a volume of unvulcanized rubber material which is then vulcanized. The scraper 14 is also flexible for deflecting in a bow shape as well as the one of the first or second embodiment. The support members 42 are connected with one another by the connecting portions 50 so that the tips 17 can be prevented from separating from each other when the support members 42 rock in the forward direction of the belt respectively.

### (Effect of the Invention)

In the belt cleaner according to the present invention, when the scraper 14 is turned about the aixs A to its standing position, its scraping portion 32 becomes bow-shaped deflecting upward. This allows the scraping portion 32 of the scraper 14 to remain in close contact with the belt surface without making a gap even if either the belt 1 is trough-shaped in cross section or the lengthwisely extending region of the belt surface gets worn, whereby the leavings on the belt surface will be scraped off in an optimum manner.

While the scraper 14 is arranged to deflect arcuately in the return direction R of the running belt 1, during the scraping operation on the belt, a mass of the leavings scraped with both side ends of the scraper 14 tends to gather in the central region of the same as the belt runs forward and thus, will fall down into a hopper disposed beneath the belt.

Particularly, the present invention is oriented towards the scraper 14 in the belt cleaner having a novel arrangement. The scraper 14 is flexible to match the arcuate shape of the holding means 40 in the holder 15. It is thus unnecessary for the scraper 14 to have a shape corresponding to the arcuate shape of the holding means 40, which facilitates its fabrication. On the other hand, the belt 1 equipped with such a belt cleaner is different in width and thus, its curvature radius of trough is also irregular. According to the present invention, one belt-like shaped type of the scraper 14 can satisfactorily be utilized for a wide range of applications so long as the plurality of holders 15 are preliminarily provided corresponding to the differnt measurements of trough curvature radius with respect to the belts having differnt widths, as it can be bent in a curve to correspond to the curvature radius of the holding means 40 when mounted to the same.

In the scraper 14 according to the present invention, the support members 42 embedded in the resilient board 44 are connected with one another by the connecting portions 50 so that the two adjoined support members 42 can be prevented from separating from each other in the forward direction of the belt. Thus, when one of the two adjoined support members 42 rocks in the forward direction of the belt, the other one will also move in rocking action. This action offers such an advantage that none of the support members 42 is prevented from returning to their original positions due to the presence of remains of the scraped material between their respective scraping portions 32 which occurs when the support members 42 rock in the forward direction of the belt respectively during the scraping operation on the belt surface.

The present invention is not limited to the aforesaid embodiments and also, various modifications can be possible within the scope of the present invention. For example, although the holding means 40 of the holder 15 is disclosed in the form of an arcuately extending recess, it may be a partially holding means holding the scraper 14 in its curved state. Additionally, although the scraping portion 32 of the scraper 14 comprises the tips 17, it may be formed on the uppermost ends of the support members 42 integrally or from other material. Further, although the resilient board 44 in which the support members 42 are embedded is employed for flexibility of the scraper 14, the support members 44 may be flexible about their respective hinge portions 43. The hinge portion 43 may also be provided in the form of a hinge-type joiner or like means other than by applying unvulcanized rubber material for heat curing.

## Claims

1. A belt cleaner for removing leavings of transferred material from the surface of a conveyor belt on the return side thereof, comprising a scraper (14) mounted transversely of the belt and a holder (15) holding said scraper, wherein said scraper (14) includes a plurality of support members (42) which have scraping portions (32) thereon for being in contact with the belt surface and are arranged in a row transversely of the belt, and said holder (15) has holding means (40) for holding said scraper (14) in a resilient manner,
**characterized in that:**
- said scraper (14) is formed of belt-like shape by a resilient board (44) in which said support members (42) are embedded in a row, said resilient board (44) comprises a cover wall (45) extending integrally along over the aligned support members (42) and covering the surfaces thereof, hinge portions (43) connecting each two adjoined support members (42) flexibly with each other so as to allow the scraper (14) to be bent in a curved form thereby but not to allow the support members (42) to separate with each other; and
- said holding means (40) of the holder (15) holds said scraper (14) in its curved form via said hinge portions (43) to deflect a maximum at a point midway between both ends of the belt from an axis (A) extending transversely of the belt, the scraper (14) is resiliently held by the holding means (40) via said cover wall (45) of the resilient board (44).

2. A belt cleaner as defined in claim 1, characterized in that said support members (42) are connected with each other by connecting portions (50) so as not to separate with each other in the forward direction of the belt.

3. A belt cleaner as defined in claim 1 or 2, characterized in that said holding means (40) of the holder (15) is a groove means for holding the scraper.

4. A belt cleaner as defined in any one of the preceding claims, characterized in that said holder (15) is supportedly mounted for pivotable movement about the axis (A).

5. A belt cleaner as defined in any one of the preceding claims, characterized in that said cover wall (45) has on the upper end a sloping portion (48) thereof tapered toward the scraping portions (32) of the scraper (14).

6. A belt cleaner as defined in any one of the preceding claims, characterized in that said scraper (14) has beneath the scraping portions (32) a resilient sheet member (18) which is extended downwardly to cover the back of the scraper (14).

## Patentansprüche

1. Bandreinigungsvorrichtung zum Entfernen von Überresten von Transportgut von der Oberfläche eines Förderbandes auf der Rücklaufseite desselben, welche einen Abstreifer (14) aufweist, welcher quer zum Band angeordnet ist, und einen Halter (15) aufweist, welcher den Abstreifer hält, wobei der Abstreifer (14) eine Mehrzahl von Halteteilen (42) umfaßt, welche Abstreifabschnitte (32) darauf haben, welche in Kontakt mit der Bandoberfläche kommen und welche in einer Reihe quer zum Band angeordnet sind, und wobei der Halter (15) eine Halteeinrichtung (40) zum federnd nachgiebigen Halten des Abstreifers (14) hat, **dadurch gekennzeichnet,** daß:
- der Abstreifer (14) in Form einer bandähnlichen Gestalt von einer federnd nachgiebigen Platte (44) gebildet wird, in welche die Halteteile (42) in einer Reihe eingebettet sind, die federnd nachgiebige Platte (44) eine Abdeckwand (45) aufweist, welche sich einteilig entlang und über die ausgerichteten Halteteile (42) erstreckt und die Oberflächen derselben bedeckt, ferner Gelenkabschnitte (43) aufweist, welche jeweils zwei benachbarte Halteteile (42) auf flexible Weise derart miteinander verbinden, daß sich der Abstreifer (14) zu einer gekrümmten Gestalt hierdurch biegen kann, es aber nicht gestattet wird, daß die Halteteile (42) sich voneinander trennen; und
- die Halteeinrichtung (40) des Halters (15) den Abstreifer (14) über die Gelenkabschnitte (43) in einer gekrümmten Gestalt derart hält, daß an einer Stelle in der Mitte zwischen den beiden Enden des Bandes von einer Achse (A), welche quer zum Band verläuft, eine maximale Auslenkung erfolgt, wobei der Abstreifer (14) auf federnd nachgiebige Weise mittels der Halteeinrichtung (40) über die Abdeckwand (45) der federnd nachgiebigen Platte (44) gehalten ist.

2. Bandreinigungsvorrichtung nach Anspruch 1, **dadurch gekennzeichnet,** daß die Halteteile (42) miteinander durch Verbindungsabschnitte (50) derart verbunden sind, daß sie sich in Vorwärtsrichtung bzw. Förderrichtung des Bandes nicht voneinander trennen.

3. Bandreinigungsvorrichtung nach Anspruch 1 oder 2, **dadurch gekennzeichnet,** daß die Halteeinrichtung (40) des Halters (15) eine ausgenommene Einrichtung zum Halten des Abstreifers ist.

4. Bandreinigungsvorrichtung nach einem der vorangehenden Ansprüche, **dadurch gekennzeichnet,** daß der Halter (15) schwenkbeweglich um die Achse (A) gelagert ist.

5. Bandreinigungsvorrichtung nach einem der vorangehenden Ansprüche**, dadurch gekennzeichnet,** daß die Abdeckwand (45) auf dem oberen Ende einen geneigten Abschnitt (48) hat, welcher in sich verjüngender Weise in Richtung zu den Abstreifabschnitten (32) des Abstreifers (14) verläuft.

6. Bandreinigungsvorrichtung nach einem der vorangehenden Ansprüche, **dadurch gekennzeichnet,** daß der Abstreifer (14) unterhalb der Abstreifabschnitte (32) ein federnd nachgiebiges, dünnes Plattenteil (18) hat, welches sich in Richtung nach unten erstreckt, um die Rückseite des Abstreifers (14) abzudecken.

## Revendications

1. Organe de nettoyage d'une courroie destiné à éliminer les résidus d'un matériau transporté de la surface d'une courroie transporteuse de son côté de retour, comprenant un racloir (14) monté transversalement à la courroie, et un support (15) du racloir, dans lequel le racloir (14) a plusieurs organes (42) de support qui ont des parties de raclage (32) destinées à être au contact de la surface de la courroie et placées en lignes transversalement à la courroie, le support (15) comprenant un dispositif (40) de support du racloir (14) de manière élastique,
caractérisé en ce que
- le racloir (14) est mis à la forme d'une courroie par un panneau élastique (44) dans lequel sont noyés les organes (42) de support qui forment une ligne, le panneau élastique (44) ayant une paroi (45) de couverture qui en est solidaire et est placée sur tous les organes alignés de support (42) et recouvre leur surface, des parties (43) d'articulation raccordant les organes adjacents (42) de support par paires de manière flexible afin que le racloir (14) puisse fléchir et prendre une forme courbe, mais ne permette pas la séparation des organes de support (42) les uns des autres, et
- le dispositif (40) de support (15) maintient le racloir (14) à sa forme courbe par l'intermédiaire des parties d'articulation (43) afin que le racloir fléchisse au maximum en un point qui se trouve au milieu entre les deux extrémités de la courroie, par rapport à un axe (A) disposé transversalement à la courroie, le racloir (14) étant supporté élastiquement par le dispositif (40) du support par l'intermédiaire de la paroi (45) de couverture du panneau élastique (44).

2. Organe de nettoyage de courroie selon la revendication 1, caractérisé en ce que les organes de support (42) sont raccordés mutuellement par des parties de raccordement (50) afin qu'ils ne se séparent pas les uns des autres dans le sens d'avance de la courroie.

3. Organe de nettoyage de courroie selon la revendication 1 ou 2, caractérisé en ce que le dispositif (40) de support (15) est un dispositif à gorge destiné à retenir le racloir.

4. Organe de nettoyage de courroie selon l'une quelconque des revendications précédentes, caractérisé en ce que le support (15) est monté afin qu'il soit supporté tout en pouvant pivoter autour de l'axe (A).

5. Organe de nettoyage de courroie selon l'une quelconque des revendications précédentes, caractérisé en ce que la paroi de couverture (45) possède, à son extrémité supérieure, une partie inclinée (48) dont la dimension varie progressivement vers les parties de raclage (32) du racloir (14).

6. Organe de nettoyage de courroie selon l'une quelconque des revendications précédentes, caractérisé en ce que le racloir (14) possède, sous les parties de raclage (32), un organe sous forme d'une feuille élastique (18) qui se prolonge vers le bas et recouvre le dos du racloir (14).
